# EUROPÄISCHE PATENTANMELDUNG

(11) **EP 1 096 284 A1**
(43) Veröffentlichungstag der Anmeldung: **02.05.2001**
(21) Anmeldenummer: 00119954.6
(22) Anmeldetag: 14.09.2000
(51) Int. Cl.: G02B 6/42

(54) **Haltevorrichtung für einen optoelektronischen Empfänger**

(30) Priorität: 30.10.1999 DE 19952363
(71) Anmelder: ROBERT BOSCH GMBH, 70442 Stuttgart (DE)
(72) Erfinder: Moess, Eberhard, 71540 Murrhardt (DE); Schwaderer, Bernhard, 71554 Weissach (DE)

(57) **Zusammenfassung**

Die Erfindung betrifft einen optoelektronischen Empfänger, mit einer Vorrichtung zum Empfangen optischer Signale und einem Koppelelement (26) zur Ausrichtung der optischen Achse der Vorrichtung auf eine sensitive Fläche (16) des optischen Sensors.

Es ist vorgesehen, daß einer Halteeinrichtung (42) des Teleskops (12) und einer Halteeinrichtung (24) des Koppelelementes (26) ein gemeinsames Justagemittel (28) zugeordnet ist.

Das Justiermittel ist als optische Bank ausgeführt auf deren Referenzfläche (32) die beiden Halterungen aufliegen.

## Beschreibung

Die Erfindung betrifft einen optoelektronischen Empfänger mit den im Oberbegriff des Anspruchs 1 genannten Merkmalen.

### Stand der Technik

Optoelektronische Empfänger der gattungsgemäßen Art sind bekannt. Diese besitzen eine Vorrichtung zum Empfangen optischer Signale (nachfolgend auch Teleskop genannt), mittels der optische Signale einer externen Quelle auf einen optischen Sensor zum Wandeln der optischen Signale in elektrische Signale lenkbar sind. Der optische Sensor besitzt hierbei eine sensitive Fläche, auf die die optischen Signale zur Wandlung in elektrische Signale treffen müssen. Dem optischen Sensor ist eine Auswerteschaltung zugeordnet, mittels der die gewandelten elektrischen Signale ausgewertet, gespeichert, übertragen oder dergleichen werden können.

Um die optische Achse der Vorrichtung zum Empfangen der optischen Signale auf die sensitive Fläche des optischen Sensors auszurichten, ist bekannt, zwischen der Vorrichtung zum Empfangen der optischen Signale und dem optischen Sensor ein Koppelelement anzuordnen. Durch Ausrichtung auf eine definierte Position des Koppelelementes zu dem optischen Sensor und der Vorrichtung zum Empfangen der optischen Signale zu dem Koppelelement, ist eine Justierung des gesamten optoelektronischen Empfängers möglich.

Bei den bekannten optoelektronischen Empfängern sind zur Justage der einzelnen Elemente eine Vielzahl von Justagestrukturen zu definieren, die zu einem komplizierten und damit kostenintensiven Aufbau führen und eine sehr umfangreiche Abarbeitung einzelner Justageschritte erforderlich macht.

### Vorteile der Erfindung

Der erfindungsgemäße optoelektronische Empfänger mit den im Anspruch 1 genannten Merkmalen bietet demgegenüber den Vorteil, daß in einfacher Weise eine exakte Justage der einzelnen Elemente des optoelektronischen Empfängers möglich ist. Dadurch, daß einer Halteeinrichtung der Vorrichtung zum Empfangen der optischen Signale und einer Halteeinrichtung des Koppelelementes ein gemeinsames Justagemittel zugeordnet ist, wird die Justage des gesamten optoelektronischen Empfängers wesentlich vereinfacht. Das gemeinsame Justagemittel läßt sich insbesondere in besonders einfacher Weise für eine nacheinanderfolgende Justage des Koppelelementes zu einer optischen Achse des optoelektronischen Empfängers und der Vorrichtung zum Empfangen der optischen Signale zu dem Koppelelement ausnutzen.

In bevorzugter Ausgestaltung der Erfindung ist vorgesehen, daß das gemeinsame Justagemittel eine optische Bank ist, die eine definierte Oberfläche aufweist, wobei die Oberfläche die Ausrichtung des Koppelelementes und der Halteeinrichtung der Vorrichtung zum Empfangen der optischen Signale übernimmt. Hierdurch wird in besonders einfacher Weise durch eine gemeinsam von dem Koppelelement und der Halteeinrichtung genutzte Referenzfläche eine exakte Justage möglich, wobei ein Ausrichtfehler der Referenzfläche zu gleichen Abweichungen der Justage des Koppelelementes und der Vorrichtung zum Empfangen der optischen Signale führt. Hierdurch ist eine exakte Ausrichtung der optischen Achse der Vorrichtung zum Empfangen der optischen Signale auf die sensitive Fläche des optischen Sensors und somit auf die optische Achse des gesamten optoelektronischen Empfängers möglich.

Insbesondere ist ferner bevorzugt, daß durch die Nutzung des gemeinsamen Justagemittels eine Selbstjustage des optoelektronischen Empfängers durch ein externes optisches Prüfsignal ermöglicht ist. Durch das gemeinsame Justagemittel lassen sich sowohl das Koppelelement als auch die Vorrichtung zum Empfangen der optischen Signale in ihrer relativen Position zueinander in einfacher Weise verändern, so daß ein durch den optischen Sensor gewandeltes elektrisches Signal bereitstellbar ist, das bei bekanntem optischen Prüfsignal ein Ergebnis für die Justage des optoelektronischen Empfängers liefert. Somit stehen hochpräzise justierte optoelektronische Empfänger zur Verfügung.

Weitere bevorzugte Ausgestaltungen der Erfindung ergeben sich aus den übrigen, in den Unteransprüchen genannten Merkmalen.

### Zeichnungen

Die Erfindung wird nachfolgend in einem Ausführungsbeispiel anhand der zugehörigen Zeichnungen näher erläutert. Es zeigen:
- Figur 1: eine schematische Schnittdarstellung durch einen optoelektronischen Empfänger und
- Figuren 2 bis 4: Detailansichten des optoelektronischen Empfängers.

### Beschreibung des Ausführungsbeispiels

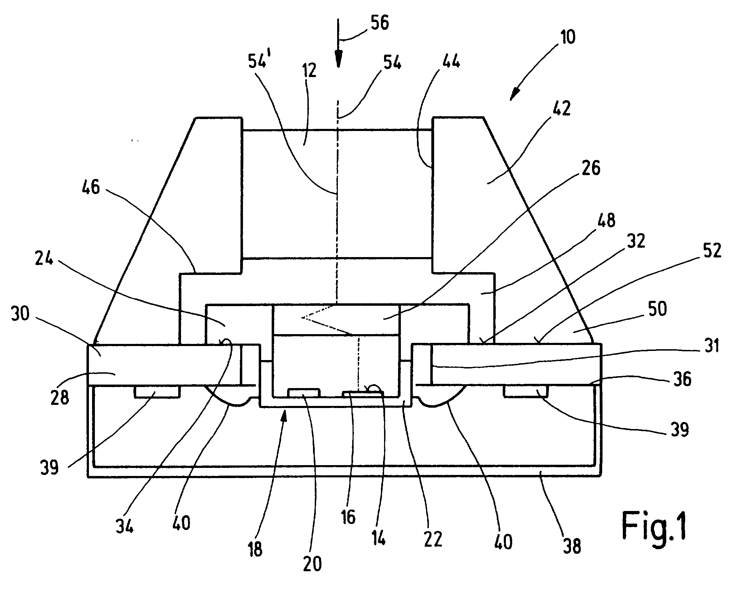

Figur 1 zeigt in einem Längsschnitt einen optoelektronischen Empfänger 10. Der optoelektronische Empfänger 10 umfaßt eine Vorrichtung 12 zum Empfangen optischer Signale (nachfolgend auch Teleskop 12 genannt). Mittels des Teleskops 12 werden optische Signale auf die sensitive Fläche 14 eines optischen Sensors 16 geleitet. Der optische Sensor 16 ist Bestandteil eines Moduls 18, das noch eine Auswerteelektronik 20 umfaßt. Der Sensor 16 und die Auswerteelektronik 20 sind in einem Gehäuse 22 angeordnet, das gleichzeitig eine Halteeinrichtung 24 für das Modul 18 ausbildet. In einer dem Teleskop 12 zugewandten Seite des Gehäuses 22 ist ein optisches Koppelelement 26 integriert. Die Position des optischen Koppelelementes 26 zu dem Sensorelement 16 wird durch Aufbau und Struktur des Gehäuses 22 definiert. Das optische Koppelelement 26 umfaßt im einzelnen nicht dargestellte Strukturen, die eine definierte Führung eines auf das Koppelelement 26 einfallenden optischen Signales bewirken, so daß dieses auf die sensitive Fläche 14 des optischen Sensors 16 trifft.

Das Gehäuse 22 liegt mit seiner Halteeinrichtung 24 auf einem Justagemittel 28 auf, das von einer optischen Bank 30 gebildet ist. Die optische Bank 30 besitzt eine definierte Oberfläche 32, auf der die Halteeinrichtung 24 mit einer Führungsfläche 34 aufliegt. Die optische Bank 30 bildet einen Deckel 36 eines Gehäuses 38, innerhalb dem weitere Schaltungsbestandteile 39 des optoelektronischen Empfängers 10 angeordnet sind. Diese Schaltungsbestandteile 39 sind beispielsweise an der Unterseite der optischen Bank 30 strukturiert. Eine elektrische Verbindung zwischen dem Modul 18 und den Schaltungsbestandteilen 39 erfolgt über hier angedeutete elektrische Verbindungen, beispielsweise Bonddrähte, Bändchenverbinder oder dergleichen. Zur Kontaktierung der Auswerteelektronik 20 besitzt das Gehäuse 22 in Figur 1 nicht näher dargestellte Durchkontaktierungen (Vias). Zur Aufnahme des Moduls 18 besitzt die optische Bank 30 einen Durchbruch 31.

Der optoelektronische Empfänger 10 umfaßt ferner eine Halteeinrichtung 42 für das Teleskop 12. Die Halteeinrichtung 42 bildet eine Aufnahme 44 für das Teleskop 12 aus, die über eine Stufe 46 in einen Aufnahmebereich 48 für das Modul 18 übergeht. Die Halteeinrichtung 42 umgreift quasi mit ihrem Fuß 50 die Halteeinrichtung 24 des Moduls 18. Der Fuß 50 der Halteeinrichtung 42 bildet eine Führungsfläche 52 aus, die auf der Oberfläche 32 der optischen Bank 30 aufliegt.

Die Oberfläche 32 der optischen Bank 30 sowie die Führungsflächen 34 der Halteeinrichtung 24 und die Führungsflächen 52 der Halteeinrichtung 42 sind plan ausgeführt, so daß über die Oberfläche 32 der optischen Bank 30 eine Ausrichtung des Moduls 18 und des Teleskops 12 zu einer optischen Achse 54 des optoelektronischen Empfängers 10 erfolgt. Über die optische Bank 30 erfolgt somit einerseits die Bestimmung eines Montagewinkels des Moduls 18 und des Teleskops 12, der idealerweise 90° zur optischen Achse 54 beträgt. Jedoch kann dieser Winkel bei entsprechend unter gleichem Winkel verlaufender Oberfläche 32 sowie Führungsflächen 34 beziehungsweise 52 auch von 90° abweichen. Ferner ist durch das gemeinsame Justagemittel 28 für das Modul 18 und das Teleskop 12 die optische Achse des Teleskops 12 auf die optische Achse des Koppelelementes 26 und somit auf die sensitive Fläche 14 des optischen Sensors 16 in einfacher Weise ausrichtbar. Hierzu bedarf es lediglich einer Relativverschiebung der Halteeinrichtung 42 des Teleskops 12 zu der Halteeinrichtung 24 des Moduls 18.

Nachfolgend soll auf die Justage des optoelektronischen Empfängers 10 eingegangen werden. Die Funktion des optoelektronischen Empfängers ist allgemein bekannt, so daß diese im Rahmen der vorliegenden Beschreibung nicht näher erläutert werden soll. Klar ist nur, daß ein optisches Signal 56 einer externen, nicht dargestellten Quelle empfangen und in elektrische Signale gewandelt werden soll. Hierzu ist die optische Achse 54' des Teleskops 12 so auszurichten, daß das Signal 56 über das optische Koppelelement 26 auf die sensitive Fläche 14 des optischen Sensors 16 trifft.

Zunächst wird das Modul 18 in den Durchbruch 31 der optischen Bank 30 eingesetzt, so daß die Führungsfläche 34 auf der Oberfläche 32 positioniert ist. Nach Positionierung des Moduls 18 erfolgt eine verzugsarme Fixierung, beispielsweise mittels Laserschweißen, Kleben oder dergleichen. Nachfolgend wird die Halteeinrichtung 42 mit dem Teleskop 12 auf die optische Bank 30 aufgesetzt. Durch die plane Führungsfläche 52 und die Oberfläche 32 kann eine exakte Relativverschiebung der Halteeinrichtung 42 und somit des Teleskops 12 zu dem Modul 18 erfolgen, ohne daß die optische Achse 54' des Teleskops 12 eine Winkelverschiebung zur optischen Achse 54 des optoelektronischen Empfängers 10 erfährt. Die optische Achse 54' des Teleskops 12 besitzt eine definierte Winkellage zur optischen Achse 54, die durch die planen Flächen 32, 52 beziehungsweise 34 bestimmt ist.

Zu Justagezwecken kann der optoelektronische Empfänger 10 mit einem definierten optischen Prüf(Justage)signal 56 beaufschlagt werden. Dieses optische Prüfsignal 56 wird durch das Teleskop 12 auf das Koppelelement 26 geführt. Durch Relativverschieben der Halteeinrichtung 42 zu der optischen Bank 30 und somit der Halteeinrichtung 24 kann die Positionierung des Teleskops 12 solange erfolgen, bis über die Auswerteelektronik 20 beziehungsweise 39 ein erwartetes, dem optischen Prüfsignal 56 entsprechendes elektrisches Signal bereitgestellt wird. Ist dies der Fall, ist das Teleskop 12 derart justiert, daß die optische Achse 54' des Teleskops 12 mit der optischen Achse 54 des optoelektronischen Empfängers 10 zusammenfällt, so daß die optischen Signale die sensitive Fläche 14 des optischen Sensors 16 erreichen. Anhand der Schilderung wird deutlich, daß die Justage durch einfache Maßnahmen realisierbar ist. Insbesondere ist quasi eine Selbstjustierung mittels eines empfangenen optischen Prüfsignales 56 möglich, der die Genauigkeit und die Kontrolle der Justage des optoelektronischen Empfängers 10 entscheidend beeinflußt und in hoher Genauigkeit sichert. Nach Erreichen der Justageposition der Halteeinrichtung 42 kann diese ebenfalls, beispielsweise mittels Laserschweißen oder Kleben, auf der optischen Bank 30 verzugsarm fixiert werden.

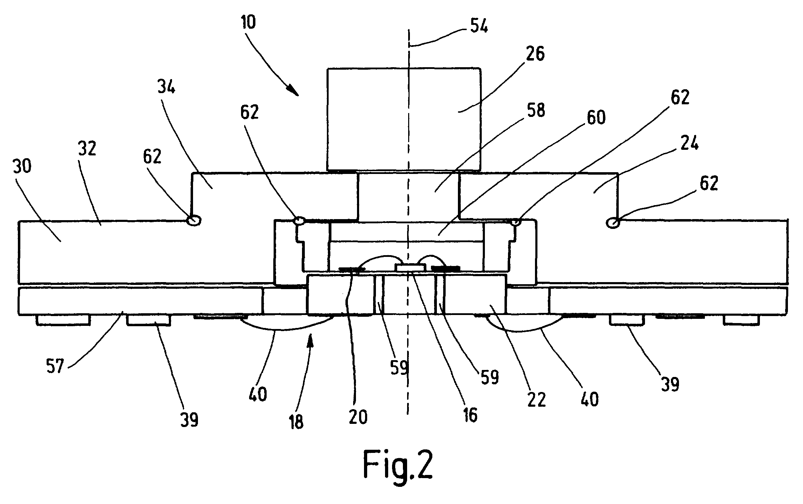

Figur 2 zeigt wesentliche Bestandteile des optoelektronischen Empfängers 10. Gleiche Teile wie in Figur 1 sind mit gleichen Bezugszeichen versehen und nicht nochmals erläutert. Die optische Bank 30 trägt hier an ihrer Unterseite einen Schaltungsträger 57, an beziehungsweise in dem die elektronischen Schaltungsbestandteile 39 integriert sind. In dem Gehäuse 22 sind Durchkontaktierungen 59 vorgesehen, über die eine elektrische Kontaktierung der Verbindungsleitungen 40 einerseits und der Auswerteelektronik 20 andererseits erfolgt. Das Gehäuse 22 ist beispielsweise ein Keramikgehäuse. Das Halteelement 24 trägt hierbei das Koppelelement 26 über einem Durchbruch 58. An der dem optischen Sensor 16 zugewandten Seite ist die Halteeinrichtung 24 mit einem optischen Fenster 60 versehen, so daß sich eine hermetische Abdichtung des optischen Sensors 16 in dem Gehäuse 22 ergibt. Angedeutet sind Fügepunkte 62, an denen ein kraftschlüssiges Fügen der Halteeinrichtung 24 und des Gehäuses 22 einerseits und der Halteeinrichtung 24 und der optischen Bank 30 andererseits erfolgen kann. Dieses kraftschlüssige Fügen kann beispielsweise durch Laserschweißen oder Klebeprozesse erfolgen. Hierbei werden Justagegenauigkeiten von zirka 0,1 µm bei einem Verzug von < 1 µm erzielt.

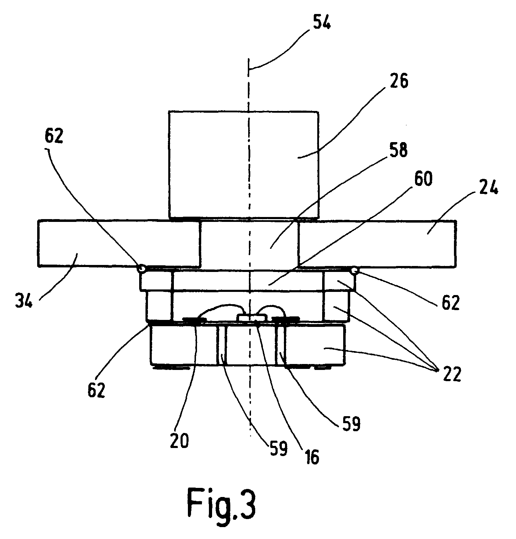

Figur 3 zeigt nochmals das Modul 18 des optoelektronischen Empfängers 10 in Alleindarstellung. Hierbei ist die Verbindung der Halteeinrichtung 24 mit dem Gehäuse 22 über die Fügepunkte 62 erkennbar.

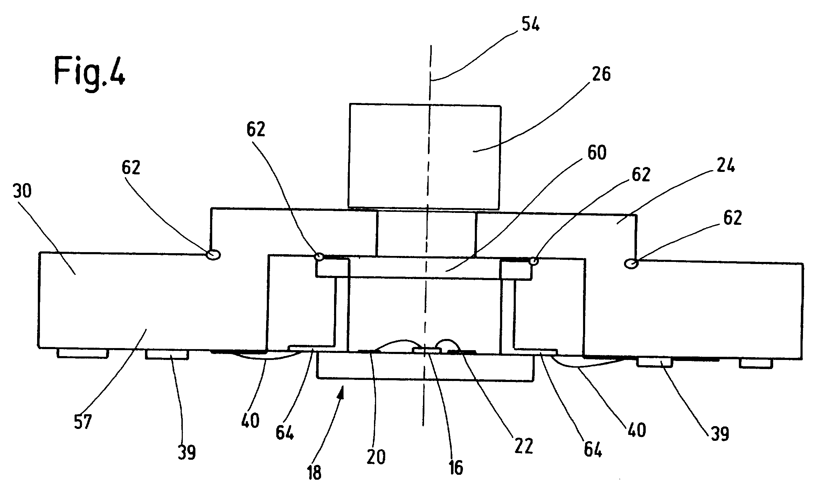

Figur 4 zeigt schließlich in einer abgewandelten Ausführungsvariante die Kontaktierung der Auswerteelektronik 20 mit den Schaltungsbestandteilen 39. Gemäß den vorhergehenden Figuren waren in dem Gehäuse 22 Durchkontaktierungen 59 vorgesehen. Bei dem in Figur 4 gezeigten Ausführungsbeispiel ist an dem Gehäuse 22 ein sogenannter Rahmenanschluß 64 (Leadframe) vorgesehen, über den eine Kontaktierung der Auswerteelektronik 20 mit den weiteren Schaltungsbestandteilen 39 möglich ist. Diese Kontaktierungsrahmen 64 lassen sich mittels bekannter Verfahren der Herstellung integrierter Bauelemente erzielen.

## Patentansprüche

1. Optoelektronischer Empfänger, mit einer Vorrichtung zum Empfangen optischer Signale, einem optischen Sensor zum Wandeln der optischen Signale in elektrische Signale und einem Koppelelement zur Ausrichtung der optischen Achse der Vorrichtung zum Empfangen der optischen Signale auf eine sensitive Fläche des optischen Sensors**, dadurch gekennzeichnet,** daß einer Halteeinrichtung (42) der Vorrichtung (12) zum Empfangen der optischen Signale und einer Halteeinrichtung (24) des Koppelelements (26) ein gemeinsames Justagemittel (28) zugeordnet ist.

2. Optoelektronischer Empfänger nach Anspruch 1, **dadurch gekennzeichnet,** daß das Justagemittel (28) eine optische Bank (30) ist, die eine definierte Oberfläche (32) aufweist, wobei die Oberfläche (32) die Ausrichtung des Koppelelementes (26) und der Vorrichtung (12) dient.

3. Optoelektronischer Empfänger nach einem der vorhergehenden Ansprüche, **dadurch gekennzeichnet,** daß die Halteeinrichtung (24) eine Führungsfläche (34) ausbildet, die plan auf der Oberfläche (32) der optischen Bank (30) aufliegt.

4. Optoelektronischer Empfänger nach einem der vorhergehenden Ansprüche, **dadurch gekennzeichnet,** daß die Halteeinrichtung (42) die Halteeinrichtung (24) umgreift.

5. Optoelektronischer Empfänger nach einem der vorhergehenden Ansprüche, **dadurch gekennzeichnet,** daß die Halteeinrichtung (42) eine Führungsfläche (52) ausbildet, die plan auf der Oberfläche (32) der optischen Bank (30) aufliegt.

6. Optoelektronischer Empfänger nach einem der vorhergehenden Ansprüche, **dadurch gekennzeichnet,** daß die Oberfläche (32) der optischen Bank (30) eine definierte Winkelposition zu einer optischen Achse (54) des optoelektronischen Empfängers (10) besitzt.

7. Optoelektronischer Empfänger nach Anspruch 6, **dadurch gekennzeichnet,** daß die Oberfläche (32) unter einem Winkel von 90° zu der optischen Achse (54) verläuft.

8. Optoelektronischer Empfänger nach einem der vorhergehenden Ansprüche, **dadurch gekennzeichnet,** daß die Halteeinrichtungen (42) und (24) nach erfolgter Justage mit der optischen Bank (30) kraftschlüssig gefügt sind.

9. Optoelektronischer Empfänger nach einem der vorhergehenden Ansprüche, **dadurch gekennzeichnet,** daß zur Selbstjustage des optoelektronischen Empfängers (10) dieser mit einem optischen Prüfsignal (56) beaufschlagt ist.
